Europäisches Patentamt

European Patent Office

Office européen des brevets

(11) Publication number: **0 108 482**
**B1**

# (12) EUROPEAN PATENT SPECIFICATION

(45) Date of publication of patent specification: **14.05.86**

(51) Int. Cl.⁴: **C 10 G 3/00, B 01 J 8/18**

(21) Application number: **83305500.7**

(22) Date of filing: **20.09.83**

(54) Heat transfer circuit for generation of steam in conversion of methanol to gasoline.

(30) Priority: **01.10.82 GB 8228095**

(43) Date of publication of application:
**16.05.84 Bulletin 84/20**

(45) Publication of the grant of the patent:
**14.05.86 Bulletin 86/20**

(84) Designated Contracting States:
**BE DE FR GB IT NL**

(56) References cited:
**GB-A-2 068 094**
**US-A-1 882 809**
**US-A-2 375 758**
**US-A-4 129 098**
**US-A-4 136 642**
**US-A-4 197 418**
**US-A-4 238 631**
**US-A-4 338 475**

(73) Proprietor: **MOBIL OIL CORPORATION**
**150 East 42nd Street**
**New York New York 10017 (US)**

(72) Inventor: **Dolkemeyer, Wilfried**
**14 Liebig Strasse**
**D-5047 Wessling (DE)**
Inventor: **Gould, Ronald Michael**
**223 Champion Way**
**Sewell New Jersey 08080 (US)**

(74) Representative: **West, Alan Harry**
**Mobil Court 3 Clements Inn**
**London WC2A 2EB (GB)**

Courier Press, Leamington Spa, England.

## Description

This invention is concerned with the recovery of heat generated during chemical reactions. More specifically, the invention is concerned with the recovery of heat of reaction resulting from the conversion of oxygenate reactants including lower alcohols, such as methanol, to one or a combination of products comprising olefins and/or aromatics. Such a conversion process has been the subject of a number of patents including U.S. Patent Nos. 3,928,483; 3,931,349; 3,969,426; 3,998,899; 4,013,732; 4,035,430; 4,044,061; 4,046,825; 4,052,479; 4,058,576; 4,062,905; 4,071,573; 4,076,761; 4,118,431 and 4,138,440.

The present invention relates to an improved method of recovering reaction heat in a process for catalytically converting oxygenate reactants such as lower alcohols, ether derivatives thereof, oxygenates of synthesis gas, or mixtures of such oxygenate reactants, to hydrocarbon products. In such a process, oxygenate reactants are passed through a reaction zone containing a fluid bed of catalyst particles which comprise zeolite material having a silica to alumina molar ratio of at least 12 and a constraint index of from 1 to 12. The heat of reaction generated during such a conversion process can be recovered by maintaining a liquid-phase heat exchange medium in heat exchange relationship with the zeolite-based catalyst particles from the reaction zone in order to transfer heat of reaction to said heat exchange medium. The heated liquid-phase heat exchange medium can then be passed from the heat exchange relationship with catalyst particles into the heat exchange relationship with water to transfer heat to the water. Such heated water can thereby be converted into steam.

The preferred oxygenate reactant useful in the present improved process is methanol. Other oxygenate reactants can be employed, however, including other lower ($C_2$—$C_3$) alcohols, ether derivatives of alcohols, e.g., dimethyl ether, or mixtures of oxygenates produced from synthesis gas, e.g., oxygenates from Fischer-Tropsch syntheses.

These oxygenate reactants, either undiluted or admixed with water or other diluents, can be catalytically converted, using zeolite-based catalysts, to produce a hydrocarbon-containing reaction product. Such a hydrocarbon-containing reaction product generally comprises olefins and/or aromatic hydrocarbons. Preferably the hydrocarbon-containing reaction product will comprise gasoline boiling range hydrocarbons such that the hydrocarbon fraction of the reaction product will be useful as, or as components of, motor fuel.

As indicated, oxygenate reactants can be converted to hydrocarbons by contact under conversion conditions with a particular type of zeolite material. Such zeolite materials are those which have a silica to alumina molar ratio of at least 12 and a constraint index within the range of 1 to 12. Zeolite materials of this type are well known. Such zeolites and their use as catalysts for conversion of oxygenates to hydrocarbons are generally described, for example, in U.S. Patent No. 4,338,475. Crystalline zeolites of the type useful in the catalysts of the present invention include ZSM-5, ZSM-11, ZSM-12, ZSM-23, ZSM-35, ZSM-38 and ZSM-48, with ZSM-5 being particularly preferred.

ZSM-5 is described in greater detail in U.S. Patent Nos. 3,702,886 and Re 29,948, which patents provide the X-ray diffraction pattern of the therein disclosed ZSM-5.

ZSM-11 is described in U.S. Patent No. 3,709,979, which discloses in particular the X-ray diffraction pattern of said ZSM-11.

ZSM-12 is described in U.S. Patent No. 3,832,449, which discloses in particular the X-ray diffraction pattern of ZSM-12.

ZSM-23 is described in U.S. Patent No. 4,076,842, which discloses in particular the X-ray diffraction pattern of ZSM-23.

ZSM-35 is described in U.S. Patent No. 4,016,245, which discloses in particular the X-ray diffraction pattern for ZSM-35.

ZSM-38· is described in U.S. Patent No. 4,046,859, which discloses in particular the X-ray diffraction pattern for ZSM-38.

ZSM-48 is more particularly described in European Patent Publication EP—A—0015132 which includes the X-ray diffraction pattern for ZSM-48.

In practicing the oxygenate conversion process of the present invention, it may be useful to incorporate the above-described crystalline zeolite material with a matrix comprising another material resistant to the temperature and other conditions employed in the process. Such matrix material is useful as a binder and imparts greater resistance to the catalyst for the severe temperature, pressure and reactant feed stream velocity conditions encountered in fluid bed operations for the conversion of oxygenates such as methanol.

Useful matrix materials include both synthetic and naturally occurring substances, as well as inorganic materials such as clay, silica and/or metal oxides. The latter may be either naturally occurring or in the form of gelatinous precipitates or gels including mixtures of silica and metal oxides. Naturally occurring clays which can be composited with the zeolite include those of the montmorillonite and kaolin families, which families include the sub-bentonites and the kaolins commonly known as Dixie, McNamee-Georgia and Florida clays or others in which the main mineral constituent is halloysite, kaolinite, dickite, nacrite or anauxite. Such clays can be used in the raw state as originally mined or initially subjected to calcination, acid treatment or chemical modification.

In addition to the foregoing materials, the zeolites employed herein may be composited with a porous matrix material, such as alumina, silica-alumina, silica-magnesia, silica-zirconia, silica-thoria, silica-beryllia, and silica-titania, as well as ternary compositions, such as silica-alumina-thoria, silica-alumina-zirconia, silica-alumina-magnesia and silica-magnesia-zirconia. The matrix may be in the form of a cogel. The relative proportions of zeolite component and inorganic oxide gel matrix, on an anhydrous basis, may vary widely with the zeolite content ranging from between about 1 to about 99 percent by weight and more usually in the range of about 5 to about 80 percent by weight of the dry composite.

In accordance with the improved process of the present invention, a particular heat transfer circuit arrangement is employed to recover heat of reaction from the fluid bed of zeolite-based catalyst particles used to promote conversion of oxygenate reactants to hydrocarbons. Such a heat transfer circuit arrangement provides means for the transfer of heat from the catalyst particles to a liquid-phase heat exchange medium. Useful liquid-phase heat exchange media can be either organic liquid materials or molten salt eutectics. Examples of suitable liquid-phase heat exchange media include heat transfer oils such as commercially available Dowtherm A which is a eutectic mixture of diphenyl and diphenyl oxide. Other useful liquid-phase heat exchange media can include molten salt eutectics such as sodium nitrate/nitrite mixtures. Other salt mixtures of this type may be employed provided temperatures encountered in the heat transfer circuit are sufficiently above the melting point of the salt mixture employed. No matter what particular heat exchange medium is utilized, it must be one which remains in the liquid phase at temperatures up to about 400°C. (750°F.), and preferably up to about 430°C. (800°F.), and at pressures below 1475 kPa (200 psig) and more preferably below 786 kPa (100 psig).

The liquid-phase heat exchange medium as hereinbefore described is, in accordance with the present invention, maintained in heat exchange relationship with catalyst particles from the fluid bed in the reaction zone as the oxygenate conversion reaction progresses. This may be accomplished by providing heat exchange means within the fluid catalyst bed in the reactor vessel itself. Alternatively, a portion of the hot catalyst particles from the fluid bed may be removed from the reaction zone and circulated to a separate catalyst cooling zone, e.g. to a catalyst cooling heat exchange unit, wherein the requisite heat exchange occurs between catalyst particles and liquid-phase heat exchange medium.

After reaction heat has been transferred from catalyst particles to liquid-phase heat exchange medium as hereinbefore described, the heated heat exchange liquid is then passed into subsequent heat exchange relationship with water. Such subsequent heat exchange with water will generally occur in a separate heat exchanger vessel wherein water is converted to steam. Steam generated in this manner is subsequently available for use in the subject process or for other uses.

In a preferred embodiment of the present invention, the liquid-phase heat exchange medium in the closed heat transfer circuit can also be used to cool product gas from the oxygenate conversion reaction zone. In such an embodiment, the liquid-phase heat exchange medium is maintained in heat exchange relationship with product gas preferably after such heat exchange medium has been used to convert water to steam and before such heat exchange medium is used to recover heat from the fluid bed catalyst particles.

The improved process of the present invention is illustrated by the Schematic of Indirect Steam Generation as set forth in Figure I. Vaporized methanol is introduced to the Fluid Bed Reactor A via feedline 1. The Fluid Bed Reactor A can be operated either in the turbulent dense bed mode or as a dilute-phase riser reactor. In this configuration, external removal of reaction heat is shown, so that the methanol feed contacts a stream of catalyst 2 that has been cooled in the Catalyst Cooler Vessel B. The combined stream of catalyst and feed enters the Reactor A via line 3 where reactants are converted to product gas which is removed via product stream 4. Such product gas is first passed through Catalyst Separation Unit C and is then sent via line 5 to a Product Gas Cooler D. Cooled products from the Product Gas Cooler D are then sent via line 6 to a gasoline recovery section (not shown). Conversion catalyst is continuously transported in a loop via lines 8 and 9 between the Fluid Bed Reactor A and a catalyst regeneration zone (not shown).

To remove the exothermic heat of reaction, cold liquid-phase heat exchange medium is circulated via line 10 to the Product Gas Cooler D where it is exchanged against the hot product gas from line 5. The liquid-phase heat exchange medium may be an organic oil or a molten salt eutectic mixture. If, for example, an organic oil is used, heat exchange in the Product Gas Cooler D lowers the product gas temperature to about 66°C to 93°C (150° to 200°F). Liquid-phase heat exchange medium warmed in the Product Gas Cooler D is then passed via line 11 to the Catalyst Cooler Vessel B where it is then used to extract the net heat of reaction from catalyst particles from the Fluid Bed Reactor A.

Outlet temperature of the liquid-phase heat exchange medium heated in the Catalyst Cooler Vessel B is about 316°C to 371°C (600°F to 700°F). The hot liquid-phase heat exchange medium is then passed via line 12 to the Steam Generator E where it is exchanged against cold boiler feed water fed to the Steam Generator E via line 13, to thereby produce high pressure [greater than 6991 kPa (1000 psig) and preferably greater than 10439 kPa (1500 psig)] steam in line 14. The liquid-phase heat exchange medium in line 10 can also be used to vaporize and/or superheat the methanol-containing feed in line 1, via an arrangement not shown, before such heat exchange medium is recirculated to the Product Gas Cooler D.

Alternatively a heat transfer cooling loop can be inserted within the reactor itself and the liquid-phase heat exchange medium can be circulated therethrough as a substitute for the Catalyst Cooler Vessel *B*. Tubular configurations of this nature are disclosed in U.S. Patent 4,338,475.

Example

The fluid bed reactor can be operated at 80—100% methanol conversion and preferably in the range of 99—100% methanol conversion. The preferred 99%—100% conversion level is representative of a dense bed reactor operating at a weight hourly space velocity (WHSV) of 1.5 to 2.5 and a temperature and pressure of 371°C to 482°C (700 to 900°F) and 240—786 kPa (20 to 100 psig), respectively. The 80% conversion specification is a reasonable expectation of riser reactor performance at space velocity in the range of 3.5 to 7.0. Product slates at these conversion levels are shown in the following Table I.

TABLE I
Product yields from fluid bed system

| Compound | Wt.% yield on total product fluid bed conversion | |
| | 94.4% | 80.8% |
| --- | --- | --- |
| Methane | .48 | .79 |
| Ethane | .10 | .17 |
| Ethene | 1.96 | 3.29 |
| Propane | .68 | 1.12 |
| Propene | 5.57 | 9.14 |
| N-butane | .63 | 1.00 |
| I-butane | 1.94 | 4.04 |
| Butenes | 5.24 | 8.03 |
| $C_5+$ | 20.59 | 12.07 |
| $H_2$ | — | .02 |
| CO | .05 | .06 |
| $CO_2$ | — | — |
| Hydrocarbons | 37.19 | 38.65 |
| Water | 53.78 | 34.78 |
| Methanol | 5.61 | 19.15 |
| Dimethyl ether | 3.37 | 7.34 |
| | 100.0 | 100.0 |

Referring to Figure I, the primary coolant loop can contain a liquid-phase heat exchange medium such as Dowtherm 'A, a commercially available heat transfer oil. Such heat transfer oil enters the Product Gas Cooler at a preferred temperature of about 66°C (150°F). Coolant pressure is sufficiently high to maintain liquid phase operation [approximately 786 kPa (100 psig)] and the coolant circulation rate is chosen such that the maximum temperature of the heat transfer oil does not exceed about 370°C to 400°C (700 to 750°F) at the exit of the Reactor or external Catalyst cooler. This hot oil can be exchanged against high quality boiler feedwater, which enters the Steam Generator at about 105°C—204°C (200—400°F), to yield 81.6 kg (180 lb) of 10439 kPa (1500 psig) saturated steam per barrel (159 liters) of feed. In a commercial methanol-to-gasoline fluid bed unit processing $7.95 \times 10^6$ liters (50,000 barrels) per day of total feed, this corresponds to a maximum generation rate of 165,560 kg/h (365,000 lb/hr.) of high pressure steam. The steam can be sent to commercially available extraction turbines for electric power generation (approximately 30 megawatts available) with extraction of 4233 kPa (600 psig) and 441 kPa (50 psig) steam for required process uses. Unextracted steam enters a final, condensing turbine stage for maximum energy recovery.

This invention provides several advantages. Generation of high pressure steam from an oxygenate conversion, e.g., methanol-to-gasoline, reactor section maximizes the thermal recovery efficiency of the process. Use of a liquid-phase organic or molten salt heat exchange medium in the primary coolant loop requires significantly less heat transfer area than would the use of steam and avoids the difficulties associated with the handling of near-critical steam. Substantially lower coolant loop pressures result in less severe metallurgy requirements and a potentially substantial reduction in downtimes by minimizing the likelihood of coolant tube rupture.

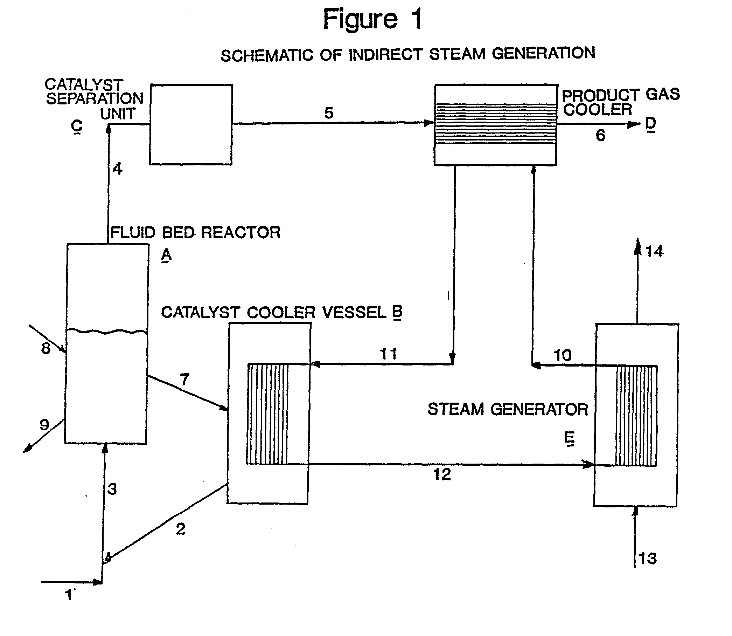

**Claims**

1. In the process for catalytically converting oxygenate reactant materials selected from lower alcohols, ether derivatives of lower alcohols, oxygenates of synthesis gas, or any one or combination of these reactants to a hydrocarbon-containing reaction product, wherein said oxygenate reactant materials are passed through a fluid bed of catalyst particles which comprise zeolite material having a silica to alumina molar ratio of at least 12 and a constraint index of from 1 to 12, to thereby produce product gas containing recoverable hydrocarbon products, the improvement whereby heat generated during said conversion reaction is recovered in the form of steam, said improvement comprising

(a) maintaining a liquid-phase heat exchange medium in a heat exchange relationship with said zeolite-based catalyst particles to thereby transfer heat of reaction from said catalyst particles to said heat exchange medium; and

(b) passing said heated liquid-phase heat exchange medium from said heat exchange relationship with said catalyst particles and into heat exchange relationship with water to thereby transfer heat to said water and convert said water into steam.

2. A process in accordance with Claim 1 wherein the liquid-phase heat exchange medium is an organic liquid.

3. A process in accordance with Claim 2 wherein said organic liquid is a mixture of diphenyl and diphenyl oxide.

4. A process in accordance with Claim 1 wherein the liquid-phase heat exchange medium is a molten salt eutectic.

5. A process in accordance with Claim 4 wherein said molten salt eutectic is a mixture of sodium nitrate and sodium nitrite.

6. A process according to Claim 2 or 4 wherein heat exchange relationship between liquid-phase heat exchange medium and catalyst particles occurs within the fluid bed of catalyst particles.

7. A process according to Claim 2 or 4 wherein heat exchange relationship between liquid-phase heat exchange medium and catalyst particles is effected by removing a portion of hot catalyst particles from the fluid bed·and transferring heat from said portion of hot catalyst particles to said liquid-phase heat exchange media in a separate catalyst cooling zone.

8. A process according to any of Claims 1 to 7 wherein said liquid-phase heat exchange medium is also maintained in heat exchange relationship with product gas from oxygenate conversion in order to thereby cool said product gas.

9. A process according to any of Claims 1 to 8 wherein said oxygenate reactant materials comprise methanol and the zeolite material of said catalyst particles comprises ZSM-5.

## Patentansprüche

1. Verfahren zur katalytischen Umwandlung von Sauerstoff enthaltenden Reaktantmaterialien, ausgewählt aus niederen Alkoholen, Etherderivaten von niederen Alkoholen, Sauerstoff enthaltenden Materialien von Synthesegas oder von irgendeiner Kombination dieser Reaktanten, zu einem Kohlenwasserstoff enthaltenden Reaktionsprodukt, wobei die Sauerstoff enthaltenden Reaktantmaterialien durch ein Wirbelbett der Katalysatorpartikel geleitet werden, die Zeolithmaterial mit einem Siliciumdioxid/Aluminiumoxid-Molverhältnis von mindestens 12 und einem Zwangsindex von 1 bis 12 umfassen, um dadurch ein Gasprodukt zu erzeugen, das rückgewinnbare Kohlenwasserstoffprodukte enthält, wobei die Verbesserung darin liegt, daß die während der Umwandlungsreaktion erzeugte Wärme in Form von Dampf zurückgewonnen wird, und diese Verbesserung umfaßt:

(a) Aufrechterhaltung eines Flüssigphasen-Wärmeaustauschmediums in einen Wärmeaustauschverhältnis mit den auf Zeolith basierenden Katalysatorpartikeln, um dadurch die Reaktionswärme aus den Katalysatorpartikeln auf das Wärmeaustauschmedium zu übertragen; und

(b) Leiten des erwärmten Flüssigphasen-Wärmeaustauschmediums aus dem Wärmeaustauschverhältnis mit den Katalysatorpartikeln in ein Wärmeaustauschverhältnis mit Wasser, um dadurch die Wärme auf das Wasser zu übertragen und das Wasser in Dampf umzuwandeln.

2. Verfahren nach Anspruch 1, worin das Flüssigphasen-Wärmeaustauschmedium eine organische Flüssigkeit ·ist.

3. Verfahren nach Anspruch 2, worin die organische Flüssigkeit eine Mischung Diphenyl und Diphenyloxid ist.

4. Verfahren nach Anspruch 1, worin das Flüssigphasen-Wärmeaustauschmedium ein Salzschmelze-Eutektikum ist.

5. Verfahren nach Anspruch 4, worin das Salzschmelze-Eutektikum eine Mischung von Natriumnitrat und Natriumnitrit ist.

6. Verfahren nach Anspruch 2 oder 4, worin das Wärmeaustauschverhältnis zwischen dem Flüssigphasen-Wärmeaustauschmedium und den Katalysatorpartikeln innerhalb des Wirbelbetts der Katalysatorpartikel auftritt.

7. Verfahren nach Anspruch 2 oder 4, worin das Wärmeaustauschverhältnis zwischen dem Flüssigphasen-Wärmeaustauschmedium und den Katalysatorpartikeln bewirkt wird, indem ein Teil .der heißen Katalysatorpartikel aus dem Wirbelbett entfernt wird und Wärme aus diesem Teil der heißen Katalysatorpartikel auf das Flüssigphasen-Wärmeaustauschmedium in einer separaten Katalysatorabkühlzone übertragen wird.

8. Verfahren nach einem der Ansprüche 1 bis 7, worin das Flüssigphasen-Wärmeaustauschmedium ebenfalls in einem Wärmeaustauschverhältnis mit dem Gasprodukt aus der Umwandlung des Sauerstoff enthaltenden Materials gehalten wird, um dadurch das Gasprodukt zu kühlen.

9. Verfahren nach einem der Ansprüche 1 bis 8, worin die Sauerstoff enthaltenden Reaktantmaterialien Methanol umfassen und das Zeolithmaterial der Katalysatorpartikel ZSM-5 umfaßt.

## Revendications

1. Dans un procédé pour la conversion par voie catalytique de réactifs oxygénés choisis parmi les alcools inférieurs, les dérivés éthérés d'alcools inférieurs, les dérivés oxygénés du gaz de synthèse, ou de l'un ou de la combinaison de ces réactifs en un produit de réaction contenant de l'hydrocarbure, caractérisé en ce que les matières réagissant à base de produit oxygéné traversent un lit fluidisé de particules de catalyseur qui comprend une matière zéolitique présentant un rapport molaire silice/alumine d'au moins 12 et un indice de contrainte de 1 à 12 pour produire ainsi un produit gazeux contenant des produits hydrocarbonés récupérables, l'amélioration étant caractérisée en ce que la chaleur générée durant la réaction de conversion est récupérée sous forme de vapeur, cette amélioration comprenant:

(a) un échange de chaleur entre le milieu d'échange thermique en phase liquide et les particules de catalyseur à base de zéolite de la zone de réaction afin de transférer la chaleur de réaction audit milieu d'échange thermique; et

(b) un échange de chaleur entre ledit milieu d'échange thermique en phase liquide ayant précédemment capté la chaleur des particules de catalyseur et de l'eau pour transférer la chaleur à l'eau et convertir cette eau en vapeur.

2. Un procédé selon la revendication 1, dans lequel le milieu d'échange thermique en phase liquide est un liquide organique.

3. Un procédé selon la revendication 2, dans lequel le liquide organique est un mélange de diphényle et d'oxyde de diphényle.

4. Un procédé selon la revendication 1, dans lequel le milieu d'échange thermique en phase liquide est un eutectique à base de sel fondu.

5. Un procédé selon la revendication 4, dans lequel ledit eutectique selon fondu est un mélange de nitrate et de nitrite de sodium.

6. Un procédé selon la revendication 2 ou 4, dans lequel l'échange de chaleur entre un milieu d'échange thermique en phase liquide et les particules de catalyseur se produit dans le lit fluidisé des particules de catalyseur.

7. Un procédé selon la revendication 2 ou 4, dans lequel l'échange thermique entre le milieu d'échange thermique en phase liquide et les particules de catalyseur est effectué par élimination d'une portion des particules de catalyseur chaudes du lit fluidisé et l'échange de chaleur de ladite portion ou des particules de catalyseur chaudes avec le milieu d'échange thermique en phase liquide dans une zone de refroidissement du catalyseur distincte.

8. Un procédé selon l'une quelconque des revendications 1 à 7, dans lequel ledit milieu d'échange thermique en phase liquide capte la chaleur du gaz produit dans la conversion du composé oxygéné afin de refroidir ledit gaz produit.

9. Un procédé selon l'une quelconque des revendications 1 à 8, dans lequel les réactifs oxygénés comprennent le méthanol et la matière zéolitique desdites particules de catalyseur comprend la ZSM-5.

# Figure 1

## SCHEMATIC OF INDIRECT STEAM GENERATION